**Europäisches Patentamt**

**European Patent Office**

**Office européen des brevets**

(19)

(11) Veröffentlichungsnummer : **0 491 731 B1**

(12) **EUROPÄISCHE PATENTSCHRIFT**

(45) Veröffentlichungstag der Patentschrift :
16.02.94 Patentblatt 94/07

(51) Int. Cl.$^5$ : **H02M 3/335**

(21) Anmeldenummer : **90912749.0**

(22) Anmeldetag : **11.09.90**

(86) Internationale Anmeldenummer :
**PCT/DE90/00697**

(87) Internationale Veröffentlichungsnummer :
**WO 91/04605 04.04.91 Gazette 91/08**

(54) **SCHALTNETZTEIL.**

(30) Priorität : **12.09.89 DE 3930432**

(43) Veröffentlichungstag der Anmeldung :
**01.07.92 Patentblatt 92/27**

(45) Bekanntmachung des Hinweises auf die
Patenterteilung :
**16.02.94 Patentblatt 94/07**

(84) Benannte Vertragsstaaten :
**AT BE CH DE ES FR GB IT LI NL SE**

(56) Entgegenhaltungen :
**EP-A- 0 301 386
IBM TECHNICAL DISCLOSURE BULLETIN,
vol. 31, no. 5, October 1988, New York, US,
pages 424-425 : "Low loss-type starter circuit
for switching mode power supply".**

(73) Patentinhaber : **Siemens Nixdorf
Informationssysteme Aktiengesellschaft
Fürstenallee 7
D-33102 Paderborn (DE)**

(72) Erfinder : **SCHWARZ, Karl
Lohnberg 1
D-8908 Krumbach/Attenhausen (DE)**
Erfinder : **BARTUSSEK, Horst
Dr. Schmetzingstr. 85
D-8900 Augsburg (DE)**
Erfinder : **RETTENMAIER, Helmut
Buchenstr. 16
D-8934 Grossaitingen (DE)**

(74) Vertreter : **Fuchs, Franz-Josef, Dr.-Ing. et al
Postfach 22 13 17
D-80503 München (DE)**

## Beschreibung

Die Erfindung betrifft ein Schaltnetzteil gemäß dem Oberbegriff des Anspruchs 1.

Insbesondere bei Sperrwandlernetzteilen, die für die Hochlaufphase nach einem Einschalten über kein eigenes Hilfsnetzteil für den im Schaltnetzteil angeordneten Regelkreis zu dessen Versorgung mit der notwendigen Versorgungs- und Regelspannung verfügen, treten eine Reihe von Problemen auf, so beispielsweise dadurch, daß die Ausgangsspannung nicht linear ansteigt, daß die Hochlaufzeit der Ausgangsspannung so gut wie nicht berechenbar ist, und daß die Hochlaufkurve der Ausgangsspannung von dem komplexen Lastwiderstand abhängt.

Da der Regelkreis erst nach der Hochlaufphase mit der vollen Versorgungs- und Regelspannung aus der Hilfswicklung versorgt wird, ist ein Kondensator für den Regelkreis notwendig, der die in dieser Phase vom Regelkreis zum Arbeiten und Starten des Regelvorganges benötigten Spannungen liefert. Zu Beginn der Hochlaufphase muß dieser Kondensator soviel Energie aufnehmen können, daß während der Hochlaufphase die Versorgungsspannung am Regelkreis nicht unter den Wert fällt, bei dem der Regelkreis wegen Unterspannung zu arbeiten aufhört und den Hochlauf abbricht. Das Problem der genügend großen Energiespeicherung kann aber nicht ohne weiteres mit einem entsprechend großen Kondensator gelöst werden, da sonst bei einem Kurzschluß am Ausgang des Schaltnetzteiles der Hochlaufversuch zu lange andauern würde, wodurch gegebenenfalls Bauelemente zu lange überlastet würden.

Ein anderes, mit der Größe dieses Kondensators zusammenhängendes Problem ist die Verzögerungszeit, nach welcher der Regelkreis beim Anlegen der Netzwechselspannung seinen ersten Regelversuch ausführt. Diese wird durch die Kapazität des angesprochenen Kondensators und den ihm zugeordneten Vorwiderstand bestimmt. Je größer der besagte Kondensator ist, desto länger dauert es, bis der Regelkreis erstmals zu regeln beginnt.

Da die Ausgangsspannung in der Hochlaufphase noch nicht ihren endgültigen Wert erreicht hat, stimmt in dieser Phase die Energiebilanz im Transformator noch nicht. Im Idealfall müßte nämlich die Energiebilanz wie folgt aussehen:

$$Ui * te = ü * Ua * ta$$

$$ta = \frac{Ui * te}{ü * Ua} \quad (1)$$

$$T = te + ta \quad (2)$$

Dabei bedeuten:

Ui - gleichgerichtete Schaltnetzteileingangsspannung
Ua - Ausgangsspannung des Schaltnetzteils
ü - windungszahlübersetzungsverhältnis (Nprim/Nsec)
te - Einschaltzeit des Schalttransistors
ta - Ausschaltzeit des Schalttransistors
T - Periodendauer

Ein durch den Regelkreis gesteuerter Schalttransistor schaltet deshalb jeweils auf einen im unterschiedlichen Maß teilaufmagnetisierten Transformator. Die Folge davon ist, daß der Kollektorstrom des Schalttransistors immer weiter ansteigt und der Transformator immer noch mehr aufmagnetisiert wird, bis bei Erreichen eines Maximalwertes der Kollektorstrom abgeschaltet wird. Es kann passieren, daß der Kollektorstrom kurz nach dem Einschalten des Schalttransistors seinen Maximalwert bereits erreicht hat und der Regelkreis diesen sofort wieder abschaltet. Bei ungünstigen Schaltungstoleranzen, vor allem aber bei hohen Schaltfrequenzen und Verwendung von bipolaren Schalttransistoren mit relativ langen Speicherzeiten, kann es zu erheblichen Überlastungen bei den Bauteilen kommen, da während der Speicherzeiten des Schalttransistors weiterhin Energie in den Transformator transportiert wird.

Wenn der komplexe Lastwiderstand am Ausgang des Schaltnetzteils sich so auswirkt, daß die Ausgangsspannung nicht genügend schnell ansteigt, kann auch das unter Umständen dazu führen, daß der Transformator bis in die Sättigung aufmagnetisiert wird, wodurch Bauteile zerstört werden können.

Von den eben beschriebenen Sachverhalten ist auch eine Ausgangsdiode im Sekundärkreis des Schaltnetzteiles betroffen. Die Ausgangsdiode ist während der Sperrphase des Schaltnetzteils so lange leitend geschaltet, wie Energie im Transformator gespeichert ist. Der Ausgangsdiodenstrom ist dabei umso größer, je mehr Energie im Transformator gespeichert ist. In der Hochlaufphase ist zu Beginn der Leitphase des Schaltnetzteils der Ausgangsdiodenstrom noch nicht auf Null zurückgegangen. Das bedeutet, daß die Ausgangsdiode von der Durchflußrichtung schlagartig in die Sperrichtung geschaltet wird, was zu einer zusätzlichen Erwärmung des Bauteils führt. Vor allem bei Schaltnetzteilen mit hohen Ausgangsspannungen kann sich dieses Bauteil, wenn es nicht stark überdimensioniert ist, rasch so sehr erhitzen, daß es zerstört wird.

Aus den Dokumenten EP,A,0 301 386, 01.02.1989 und IBM Technical Disclosure Bulletin, Vol. 31, No. 5, 05.10.1988, Seiten 424 - 425 sind Schaltnetzteile bekannt, die sich mit der Hochlaufphase insofern befassen, als sie Maßnahmen beinhalten, durch die die Zeit für die Hochlaufphase verkürzt wird. Der Verlauf der Hochlaufphase selbst, der möglichst gleichmäßig sein sollte, wird dadurch aber nicht beeinflußt. Die Beschleunigung der Hochlaufphase wird dadurch erreicht, daß die Versorgungsspannung des Regelkreises in der Einschaltphase über ein serielles Zeitglied mit möglichst kurzer Zeitkonstante von der gleichgerichteten Netzspannung und später erst vom Meßstromkreis abgeleitet wird. Zur Vermeidung von Verlustleistung wird das serielle Zeitglied nach der Hochlaufphase abgeklemmt. Der schaltungstechnische Aufwand für diese Maßnahmen ist entsprechend groß.

Aufgabe der Erfindung ist es, ein Schaltnetzteil der eingangs genannten Art mit einfachen Maßnahmen so zu verbessern, daß das Schaltnetzteil eine definierte und für die Bauteile schonendere Hochlaufphase aufweist.

Diese Aufgabe wird erfindungsgemäß durch das im kennzeichnenden Teil des Anspruchs 1 angegebene Merkmal gelöst. Es ist insofern eine einfache Maßnahme, weil nur ein zusätzliches Bauteil nötig ist, das auch noch nachträglich in die Schaltung eingebracht werden kann. Mit Hilfe des Differenzierkondensators wird erreicht, daß der Regelkreis schon mit dem Beginn der Hochlaufphase die benötigte Regelspannung erhält. Der Regelkreis steuert das Schaltnetzteil dann so, daß die am Spannungsteiler abfallende Spannung, die die Grundlage für die Regelspannung und für die Versorgungsspannung des Regelkreises bildet, konstant gehalten wird. Das hat zur Folge, daß die Ausgangsspannung des Schaltnetzteiles gleichmäßig linear ansteigt. Die hohe Belastung der verschiedenen Bauteile entfällt, da nun die jeweils notwendige Abmagnetisierungszeit ta für den Transformator zur Verfügung gestellt wird. Durch den gleichmäßigen Anstieg kann auch die Dauer des Hochlaufens besser bestimmt werden. Der während der Hochlaufphase die Versorgungs- und die Regelspannung für den Regelkreis liefernde Kondensator kann entfallen bzw. klein bleiben, weil seine Aufgabe vom Differenzierkondensator übernommen wird. Vorteilhafterweise wird er für die Hochfrequenzabblockung noch beibehalten.

Eine vorteilhafte Ausgestaltung der Erfindung ist Gegenstand des Unteranspruchs. Wegen der relativen Größe des Differenzierkondensators ist es zweckmäßig, hierfür gepolte Elektrolytkondensatoren zu verwenden.

Nachfolgend werden zwei Ausführungsbeispiele der Erfindung anhand der Zeichnung näher erläutert. Es zeigen:

FIG 1 ein Prinzipschaltbild eines ersten Schaltnetzteiles gemäß der Erfindung,

FIG 2 ein Prinzipschaltbild eines zweiten Schaltnetzteils gemäß der Erfindung,

FIG 3 ein Spannungsdiagramm bezüglich der Schaltnetzteilausgangsspannung und der Regelspannung eines herkömmlichen Schaltnetzteiles während der Hochlaufphase und

FIG 4 ein Spannungsdiagramm bezüglich der Schaltnetzteilausgangsspannung und der Regelspannung eines Schaltnetzteiles gemäß FIG 1 oder 2 während der Hochlaufphase.

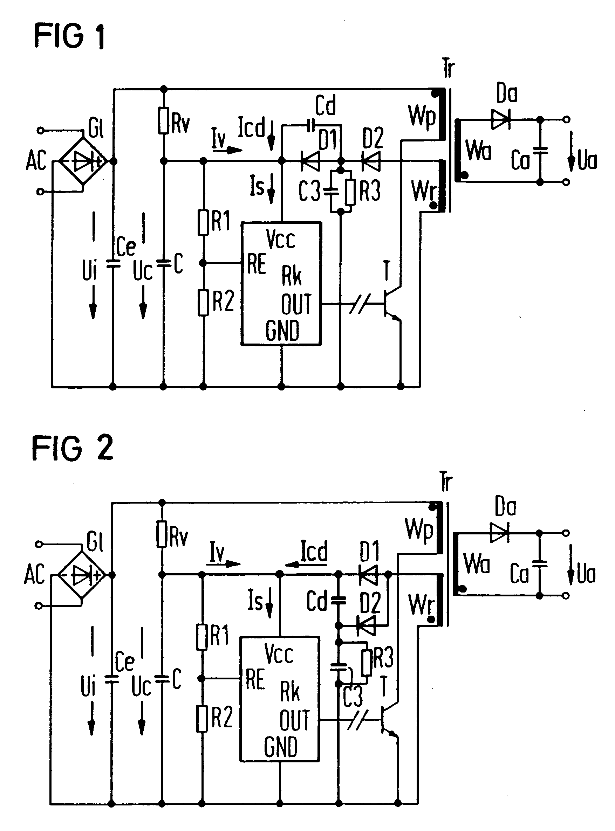

Sowohl FIG 1 als auch FIG 2 zeigen einen prinzipiellen Schaltungsaufbau eines nach dem Sperrwandlerprinzip arbeitenden Schaltnetzteiles. Die in den FIG 1 und 2 angegebenen Schaltnetzteile unterscheiden sich vom Stand der Technik durch einen zusätzlichen Differenzierkondensator Cd, dem jeweils zwei Diodenschaltungen D1 und D2 zugeordnet sind. Beide Schaltnetzteile weisen einen Transformator Tr mit drei Wicklungen Wp, Wr und Wa auf. Die erste und zweite Wicklung Wp, Wr, sind dem Primärkreis und die dritte Wicklung Wa ist dem Sekundärkreis zugeordnet. Die zweite Wicklung Wr ist eine Hilfswicklung und liefert für einen Regelkreis Rk die Versorgungs- und Regelspannung. Die mit einem Punkt gekennzeichneten Enden der Wicklungen bilden die jeweiligen Wicklungseingänge mit jeweils gleichem Wicklungssinn. Der Transformator Tr ist ein Energiespeicher, der in den Leitphasen des Schaltnetzteiles Energie von der Primärseite aufnimmt und in den Sperrphasen des Schaltnetzteiles diese an die Sekundärseite wieder abgibt.

Auf der Primärseite des Transformators Tr sind jeweils eine Eingangsgleichrichterschaltung Gl und ein Eingangskondensator Ce vorgesehen. Der Eingangsgleichrichterschaltung Gl wird die Eingangswechselspannung AC zugeführt. Der Eingangskondensator Ce ist zwischen den gepolten Ausgangsklemmen der Eingangsgleichrichterschaltung Gl angeordnet. Er glättet die von der Eingangsgleichrichterschaltung Gl gleichgerichtete Spannung. Gleichzeitig wirkt er als Spannungspuffer bei Amplitudenschwankungen der Eingangswechselspannung Ac.

Die gepolten Ausgänge der Eingangsgleichrichterschaltung Gl sind je mit einem der Wicklungseingänge der beiden ersten Wicklungen Wp und Wr verbunden, wobei der positive Ausgang der Eingangsgleichrichterschaltung Gl mit dem Wicklungseingang der ersten Wicklung Wp verbunden ist. Ferner ist zwischen diesen Ausgängen je ein Reihen-RC-Glied, bestehend aus einem Vorwiderstand Rv und einem Kondensator C angeordnet, wobei der Vorwiderstand Rv an den positiven Ausgang der Eingangsgleichrichterschaltung Gl angeschlossen ist. Parallel zum Kondensator C sind eine Spannungsteilerschaltung, bestehend aus den zwei Einzelwiderständen R1 und R2, und ein Regelkreis Rk vorgesehen. Der Eingang für die Versorgungsspannung Vcc des Regelkreises Rk ist dabei mit dem Vorwiderstand Rv und dem ersten Widerstand R1 der Spannungsteilerschaltung verbunden, während der Regeleingang Re des Regelkreises Rk mit dem Mittelanschluß der Spannungsteilerschaltung und ferner der Masseanschluß GND des Regelkreises Rk mit dem Sammelanschluß der Primärseite, der von dem negativen Ausgang der Eingangsgleichrichterschaltung Gl gebildet ist, verbunden sind.

Der Regelkreis Rk weist einen Ausgang OUT auf, der mit dem Basisanschluß eines bipolaren npn-Schalttransistors T verbunden ist. Dieser Schalttransistor wird abhängig von einer am Regeleingang RE des Regelkreises Rk anliegenden Regelspannung angesteuert. Zwischen dem Ausgang OUT des Regelkreises Rk und dem Basisanschluß des Schalttransistors T können weitere Bauelemente angeordnet sein, was in dem betreffenden Leitungsabschnitt durch zwei schräg parallel verlaufende Striche angedeutet ist. Der Schalttransistor T ist mit seinem Kollektoranschluß mit dem Wicklungsausgang der ersten Wicklung Wp und mit seinem Emitteranschluß mit dem oben definierten Sammelanschluß verbunden.

Der Wicklungsausgang der Hilfswicklung Wr ist bei dem Schaltnetzteil gemäß FIG 1 über zwei in Mitrichtung gepolte Diodenschaltungen D1 und D2 und bei dem Schaltnetzteil gemäß FIG 2 nur über eine in Mitrichtung gepolte Diodenschaltung D1 mit dem Versorgungseingang Vcc des Regelkreises Rk verbunden. Darüberhinaus ist ein Parallel-RC-Glied, bestehend aus einem niederohmigen Widerstand R3 und einem in der Benennung diesem angepaßten Kondensator C3, bei dem Schaltnetzteil gemäß der FIG 1 einerseits mit einem Anschluß zwischen den Diodenschaltungen D1 und D2 und andererseits mit dem Sammelanschluß des Primärkreises verbunden.

Bei dem Schaltnetzteil gemäß der FIG 2 ist die zweite Diodenschaltung D2 bezüglich der -Anodenanschlüsse parallel zur ersten Diodenschaltung D1 geschaltet. Ferner ist das Parallel-RC-Glied anstelle des Anschlusses zwischen den beiden Diodenschaltungen mit dem Kathodenanschluß der zweiten Diodenschaltung D2 verbunden.

Auf der Sekundärseite des Transformators Tr ist eine Ausgangsdiodenschaltung Da und ein Ausgangskondensator Ca vorgesehen. Die Ausgangsdiodenschaltung Da ist mit dem Anodenanschluß mit dem Wicklungsausgang der dritten Wicklung Wa des Transformators Tr verbunden. Der Ausgangskondensator Da ist zwischen die Ausgangsklemmen des Schaltnetzteiles geschaltet. Die Ausgangsdiodenschaltung Da erlaubt ein Laden des Ausgangskondensators Ca.

Nachfolgend wird die prinzipiell gleiche Arbeitsweise der beiden Schaltnetzteile gemäß FIG 1 und FIG 2 näher erläutert:

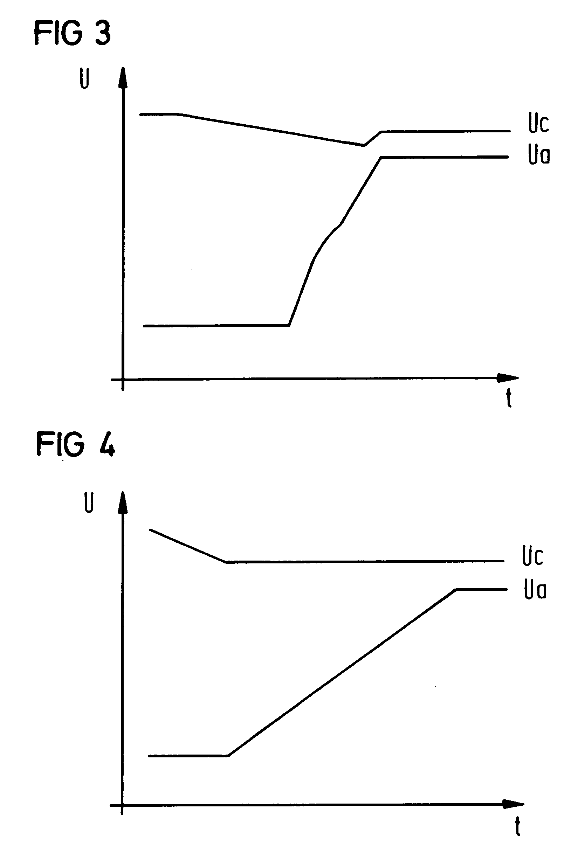

Beim Anlegen einer Eingangswechselspannung AC an die Eingangsanschlüsse der Eingangsgleichrichterschaltung Gl wird die Eingangswechselspannung AC mit Hilfe der Eingangsgleichrichter- schaltung Gl gleichgerichtet und die gleichgerichtete Spannung im Eingangskondensator Ce gespeichert. Am Eingangskondensator Ce liegt damit die Eingangsspannung Ui an. Die Eingangsspannung Ui liegt ferner an dem Reihen-RC-Glied, gebildet durch den Vorwiderstand Rv und dem Kondensator C, an. Der Kondensator C wird über den Vorwiderstand Rv aufgeladen, bis der Regelkreis Rk zu arbeiten beginnt. Mit dem Beginn der Arbeitsaufnahme des Regelkreises Rk wird der Schalttransistor T mit einem Anfangstastverhältnis periodisch eingeschaltet. Im eingeschalteten Zustand befindet sich das Schaltnetzteil in der sogenannten Leitphase und der Transformator nimmt Energie auf. Durch die entgegengesetzten Wicklungssinne der einzelnen Wicklungen des Transformators Tr wird jeweils in der Leitphase keine Energie an den Sekundärkreis und an den Regelkreis abgegeben. Die Energieübertragung an diese Kreise erfolgt jeweils in der Sperrphase des Schalttransistors T. Dann werden der Ausgangskondensator Ca und der im Parallel-RC-Glied angeordnete Kondensator C3 geladen. Bis der Kondensator C3 auf einen Wert geladen ist, der das Weiterarbeiten des Regelkreises Rk erlaubt, muß der Kondensator C die benötigte Energie liefern. Das heißt, der Kondensator C wird mit Beginn der Arbeitsaufnahme des Regelkreises Rk wieder entladen. Dieser Sachverhalt kann der FIG 3, obere Kurve, entnommen werden. Diese Kurve gibt den qualitativen Spannungsverlauf der Kondensatorspannung Uc des Kondensators C in der Hochlaufphase wieder. Ist der Kondensator C3 des Parallel-RC-Gliedes genügend geladen, wird der Kondensator C entlastet und wieder nachgeladen. Dies macht sich in der oberen Kurve durch einen Knick im Spannungsverlauf bemerkbar.

Im Vergleich dazu zeigt die untere Kurve der FIG 3 den qualitativen Spannungsverlauf der Ausgangsspannung Ua am Ausgangskondensator Ca. Diese steigt parallel zum Ladevorgang des Kondensators C entsprechend einem annähernd freien Regelverhalten des Regelkreises Rk unregelmäßig bis zu einem Endwert an. Kurz vorher ist der Kondensator C3 des Parallel-RC-Gliedes genügend geladen, weshalb der Spannungsverlauf der Kondensatorspannung Uc vor Erreichen des Höchstwertes der Ausgangsspannung Ua den Knickpunkt aufweist.

Zur Verbesserung des Hochlaufverhaltens der Ausgangsspannung Ua ist bei dem Schaltnetzteil nach FIG 1 über die Diodenschaltung D1 ein Differenzierkondensator Cd gelegt. Analog dazu ist bei dem Schaltnetzteil nach FIG 2 der Differenzierkondensator Cd zwischen den jeweiligen Kathodenanschlüssen der beiden Diodenschaltungen D1 und D2 angeordnet. Der Differenzierkondensator Cd wird zusammen mit dem Kondensator C über den Vorwiderstand Rv und dem niederohmigen Widerstand R3 geladen. In den Sperrphasen des Schalttransistors T wird der Differenzierkondensator Cd entladen, wobei er einen differenziellen Stromanteil Icd zur Versorgungs- und Regelspannung am Versorungs- und am Regeleingang Vcc und Re des Regelkreises Rk liefert. Das heißt, daß der Regelkreis bereits am Beginn der Hochlaufphase die Regelinformation erhält. Damit bleibt die Regelinformation konstant. Die Folge davon ist, daß der Hochlauf der Ausgangsspannung Ua gleichmäßig linear ansteigend abläuft. Dieser Sachverhalt ist in der FIG 4 durch die obere Spannungskurve, die die Kondensatorspannung Uc wiedergibt, und die untere Spannungskurve, die die Ausgangsspannung Ua angibt, qualitativ wiedergegeben.

Unter der Annahme idealer Diodenschaltungen D1 und D2 läßt sich der Sachverhalt wie folgt begründen:
Während der Hochlaufphase $0 < t < th$ gilt:

$$Uc = konstant = k1 * th * \ddot{u}l \quad (4)$$
$$Uc = fl(th) = \ddot{u}l * \dot{U}a(t) * th \quad (5)$$

Aus (4) und (5) folgt:

$$fl(t) = \int_0^t k1 * dt$$

$$fl(t) = k1 * t + k2$$

Aus Anfangsbedingung: $k2 = 0$ folgt:

$$fl(t) = k1 * t \quad (6)$$
$$k1 = \frac{Uc}{th} \quad (7)$$
$$th = \frac{Uc * Cd}{Icd} \quad (8)$$
$$Icd = Is - \frac{Ui - Uc}{Rv} + \frac{Uc}{R1 + R2} \quad (9)$$

Aus (7), (8) und (9) folgt:

$$K1 = \frac{1}{Cd} * (Is - \frac{Ui - Uc}{Rv} + \frac{Uc}{R1 + R2}) \quad (10)$$

Es gilt:

$$\left. \begin{aligned} Ua(t) &= \frac{1}{\ddot{u}l} * k1 * t \qquad\qquad && 0 \leq t \leq th \\[2em] Ua(t) &= \frac{1}{\ddot{u}l} * Uc && t > th \end{aligned} \right\} \quad (11)$$

In den vorstehenden Gleichungen bedeuten:

| | |
|---|---|
| th | - Hochlaufzeit |
| Uc | - Versorgungs- und Regelspannung |
| k1 | - Konstante (Steigung der Ausgangsspannung Ua) |
| fl(t) | - Spannungsverlauf am Widerstand R3 |
| Ua(t) | - Spannungsverlauf der Ausgangsspannung Ua des Schaltnetzteils |
| ül | - Windungszahlübersetzungsverhältnis Wr/Wa |
| Cd | - Kapazität des Differenzierkondensators Cd |
| Icd | - Strom durch den Differenzierkondensators Cd |
| Is | - Eingangsstrom am Versorgungseingang Vcc |
| Iv | - Reststrom des durch Rv fließenden Stroms, mit |

$$Iv = \frac{Ui - Uc}{Rv} + \frac{Uc}{R1 + R2}$$

Ui      - gleichgerichtete Schaltnetzteileingangsspannung

Rv       - Vorwiderstand

R1, R2   - Spannungsteiler

Da der Differenzierkondensator Cd die Aufgabe des Kondensators C übernimmt, kann der Kondensator C entfallen bzw. für die Abblockung hochfrequenter Spannungsanteile klein werden. Da die Versorgungsspannung am Versorgungsspannungseingang Vcc des Regelkreises Rk konstant ist, kann der Differenzierkondensator Cd gegenüber dem vormals unbedingt notwendigen Kondensator C in FIG 1 bzw. FIG 2 erfahrungsgemäß um den Faktor 5 kleiner gewählt werden. Die Betriebssicherheit wird erhöht. Das Schaltnetzteil läuft schneller hoch und schaltet bei Kurzschluß am Schaltnetzteilausgang schneller ab.

Das Schaltnetzteil gemäß FIG 2 weist gegenüber dem Schaltnetzteil gemäß FIG 1 den Vorteil auf, daß der Differenzierkondensator Cd nicht umgepolt wird.

**Patentansprüche**

1.    Schaltnetzteil mit einem seriellen RC-Glied (Rv, C) als Anlaufschaltung und einer eine Versorgungs- und Regelspannung für einen Regelkreis (Rk) liefernden Hilfswicklung (Wr), deren eine Anschlußseite einerseits über wenigstens eine in Mitrichtung angeordnete Diodenschaltung (D1) mit einem Versorgungseingang und über eine Spannungsteilerschaltung (R1, R2) mit einem Regeleingang (RE) des Regelkreises (Rk) und andererseits über wenigstens eine in Mitrichtung angeordnete Diodenschaltung (D2) und ein nachfolgendes, ein niederohmiges Widerstandsbauteil (R3) aufweisendes paralleles RC-Glied (R3, C3) mit einem primärseitigen Sammelanschluß verbunden ist,
dadurch gekennzeichnet, daß ein Differenzierkondensator (Cd) vorgesehen ist, dessen eine Anschlußseite mit dem Kathodenanschluß derjenigen Diodenschaltung (z.B. D1) verbunden ist, die dem Versorgungseingang (Vcc) des Regelkreises (Rk) nächstliegend zugeordnet ist, und dessen andere Anschlußseite mit dem Kathodenanschluß derjenigen Diodenschaltung (z.B. D2) verbunden ist, deren Kathodenanschluß dem parallelen RC-Glied (R3, C3) nächstliegend zugeordnet ist.

2.    Schaltnetzteil nach Anspruch 1,
dadurch gekennzeichnet, daß der Differenzierkondensator (Cd) gepolte Anschlußseiten aufweist, von denen die positiv gepolte Anschlußseite mit dem Kathodenanschluß derjenigen Diodenschaltung (z.B. D1) verbunden ist, die dem Versorgungseingang (Vcc) des Regelkreises (Rk) nächstliegend zugeordnet ist.

**Claims**

1.    Switched-mode power supply having a serial RC element (Rv, C) as starting circuit and an auxiliary winding (Wr) which delivers a supply and control voltage for a control loop (Rk) and whose one terminal end is connected, on the one hand, via at least one diode circuit (D1) arranged in the same direction to a supply input and via a voltage divider circuit (R1, R2) to a control input (RE) of the control loop (Rk) and, on the other hand, via at least one diode circuit (D2) arranged in the same direction and a downstream parallel RC element (R3, C3) having a low-resistance resistance component (R3) to a collecting terminal on the primary side, characterized in that a differentiating capacitor (Cd) is provided whose one terminal end is connected to the cathode terminal of that diode circuit (for example D1) which is assigned adjacent to the supply input (Vcc) of the control loop (Rk), and whose other terminal end is connected to the cathode terminal of that diode circuit (for example D2) whose cathode terminal is assigned adjacent to the parallel RC element (R3, C3).

2.    Switched-mode power supply according to Claim 1, characterized in that the differentiating capacitor (Cd) has poled terminal ends, of which the positively poled terminal end is connected to the cathode terminal of that diode circuit (for example D1) which is assigned adjacent to the supply input (Vcc) of the control loop (Rk).

**Revendications**

1.    Bloc d'alimentation comportant un circuit RC série (Rv, C) en tant que circuit de démarrage et un enroulement auxiliaire (Wr) qui délivre une tension d'alimentation et de régulation pour un circuit de régulation (Rk) et dont un côté de raccordement est relié, d'une part, par l'intermédiaire d'au moins un circuit à diodes (D) disposé dans le sens passant, à une entrée d'alimentation et par l'intermédiaire d'un circuit diviseur de tension (R1,R2), à une entrée de régulation (RE) du circuit de réglage (Rk), et, d'autre part, par l'intermédiaire d'au moins un circuit à diodes (D2) monté dans le sens passant, et d'un circuit RC parallèle aval (R3,C3), possédant un composant résistif de faible valeur ohmique (R3), à une borne omnibus située côté primaire,

caractérisé par le fait qu'il est prévu un condensateur de différentiation (Cd), dont un côté de raccordement est relié à la borne de cathode du circuit à diodes (par exemple D1), qui est associé à l'entrée d'alimentation en (Vcc) du circuit de régulation (Rk), en en étant le plus rapproché, et dont l'autre côté de raccordement est relié à la borne de cathode du circuit à diodes (par exemple D2), dont la borne de cathode est associée dans la position la plus rapprochée au circuit RC parallèle (R3,C3).

2. Bloc d'alimentation selon la revendication 1, caractérisé en ce que le condensateur de différentiation (Cd) comporte des côtés de raccordement polarisés, parmi lesquels le côté de raccordement polarisé positivement est raccordé à la borne de cathode du circuit à diodes (par exemple D1), qui est associé, tout en en étant le plus rapproché, à l'entrée d'alimentation (Vcc) du circuit de régulation (Rk).

# FIG 1

# FIG 2

FIG 3

FIG 4